Europäisches Patentamt

European Patent Office

Office européen des brevets

(11) Veröffentlichungsnummer: **0 246 197 A1**

(12) **EUROPÄISCHE PATENTANMELDUNG**

(21) Anmeldenummer: 87810300.1

(22) Anmeldetag: 14.05.87

(51) Int. Cl.⁴: **A 23 C 9/154**
A 23 P 1/16

(30) Priorität: 16.05.86 CH 1995/86

(43) Veröffentlichungstag der Anmeldung:
**19.11.87 Patentblatt 87/47**

(84) Benannte Vertragsstaaten:
**AT BE CH DE ES FR GB IT LI LU NL SE**

(71) Anmelder: **BATTELLE MEMORIAL INSTITUTE**
**7 route de Drize**
**CH-1227 Carouge/Genève (CH)**

(72) Erfinder: **Giddey, Claude**
**59, Route de Chêne**
**CH-1208 Geneve (CH)**

**Dove, Georges**
**1, Quai du Cheval Blanc**
**CH-1227 Carouge (CH)**

(74) Vertreter: **Dousse, Blasco et al**
**7, route de Drize**
**CH-1227 Carouge/Genève (CH)**

(54) **Luftdurchsetztes Nahrungsmittel auf der Basis von frischer Milch und Verfahren zu seiner Herstellung.**

(57) Leichtes Nahrungsmittel auf der Basis von Milch in Form von Schaum, hergestellt, indem durch Schlagen Luft oder Gas beigemengt wird, so daß die Dichte unter 0,75 liegt. Dieser Schaum enthält frische unter vermindertem Druck evaporierte Milch, schützende, gelierende, aromatisierende und quellende Agenzien.

EP 0 246 197 A1

**Beschreibung**

Luftdurchsetztes Nahrungsmittel auf der Basis von frischer Milch und Verfahren zu seiner Herstellung

Die vorliegende Erfindung betrifft ein luftdurchsetztes Nahrungsmittel auf der Basis von frischer Milch sowie die Herstellung eines solchen Nahrungsmittels (Produkts). Dieses weist eine feste und homogene Schaumstruktur auf, flüssiger als die von Nougat, die aus einer Dispersion von Mikroblasen aus Luft (oder aus einem inerten Gas) in der Materie einer frischen Milch, der ein Teil des Wassers im Verlaufe der Herstellung entzogen wurde, besteht. Deshalb wird das betreffende Nahrungsmittel im folgenden als "Schaum aus frischer Milch" bezeichnet.

Es wird betont, daß eine solche Definition das Vorhandensein von Kondensmilch des klassischen Typs im vorliegenden Produkt ausschließt. Denn eine derartige Milch entspricht aufgrund der Konditionen bei ihrer Herstellung (Sterilisation) nicht dem erfindungsgemäßen Produkt hinsichtlich Geschmack, Konsistenz und Färbung.

An sich ist der Begriff des Nahrungsmittel-Schaums, hergestellt aus Milchprodukten, nicht neu. So beschreibt FR-A-2 133 292 (LAITERIES BRIDEL) ein leichtes Milchprodukt, das durch Schlagen von Milch in der Kälte hergestellt wird, wobei die Milch Lab enthält. Es wird ein Schaum der Dichte 0,25 bis 0,55 erhalten. Die Milch kann konzentriert sein, und sie kann mit einem Mikroorganismus vom Typ Penicillium - wie er zur Käseherstellung dient - geimpft sein.

Die Druckschrift FR-A-2 180 014 (UNILEVER) bezieht sich auf ein Verfahren zur Herstellung von pasteurisierten, viskosen und luftdurchsetzten Milchprodukten auf der Basis von Käse nach Bauernart und Yoghurts.

Aus der Druckschrift EP-A 59 617 (MERCK & CO.) ist ein Frappé auf der Basis von Yoghurts und Milch im Gewichtsverhältnis von 80-53/20-47 bekannt; dieses Frappé enthält ein schäumendes Mittel auf der Grundlage von Soja-Protein (0,5 bis 2,5 %), Carboxymethyl-cellulose und Xanthan-Gummi.

Das Patent FR-A 2 541 870 (CENTRALE LAITIERE DE HAUTE NORMANDIE) beschreibt ein Verfahren zur Stabilisierung eines festen Nahrungsmittels, das einen Restgehalt an Feuchtigkeit aufweist, sowie die erhaltenen Produkte. Dieses Verfahren ist dadurch gekennzeichnet, daß man ein pulverförmiges Gemisch herstellt, in dem der N-haltige Bestandteil sich aus Milchproteinen zusammensetzt, wobei die Rest-Lactose fast völlig hydrolysiert ist und die Fette einen genügend hohen Schmelzpunkt aufweisen, um die Partikel, die bei den Temperaturen der weiteren Behandlung fest bleiben, zu umhüllen, und dadurch, daß man das besagte pulverförmige Gemisch bei einer Temperatur, die so gewählt ist, daß die Temperatur des Ge misches unter dem Schmelzpunkt der Fette liegt, in eine wäßrige Phase einführt, die aus einem Schaum besteht, der im wesentlichen Kohlenhydrate und wenigstens eine Mittel enthält, das geeignet ist, ein mechanisches Aufquellen in wäßrigem Milieu bei der bestimmten Temperatur zu erlauben; der erhaltene Schaum wird stabilisiert, wobei er ausreichend geschmeidig ist, um das Zugeben des pulverigen Gemisches zu erlauben, ohne daß die Luftblasen des Schaumes zerstört werden. Das beschriebene Verfahren führt zu einem teigigen Produkt mit einem Feuchtigkeitsgehalt von mindestens 10 % und im allgemeinen von zwischen 10 und 20 Gew.-% Feuchtigkeit (bei einer Dichte von 0,8 bis 0,9).

Die Druckschrift FR-A 2 473 269 (FERRERO) beschreibt ein protein- und zuckerhaltiges Nahrungsmittel mit Schaumkonsistenz, das gezuckerte, konzentrierte, teilweise entrahmte Milch enthält. Dieses Produkt besteht aus einer "Öl-in-Wasser"-Emulsion, die eßbare Fette, Milchprotein und Zucker enthält; das Ganze beim pH-Wert der natürlichen Milch (6,2 bis 7,5). Man erhält dieses Produkt ausgehend von einer Ölphase aus Lebensmittelfett und einer wäßrigen Phase aus gezuckerter, konzentrierter, teilweise entrahmter Milch, wobei es eine Viskosität von 2.000 bis 6.000 cP bei 20°C aufweist und nach Erhitzen auf 80°C und Abkühlen auf 40°C, eine Schwankung der Viskosität bei 40°C ($\Delta V$ in der Figur) nicht über 1.500 cP auftritt; mit einer Milch, die besonders auf ein Proteinverhältnis Kasein/Lactoprotein von 2,8/1 bis 3,2/1 eingestellt ist, hat die Emulsion einen Wassergehalt von 17 bis 35 %, und ihre physikalische und chemische Stabilität hält mehrere Monate.

Allerdings entspricht keines der hier beschriebenen leichten Produkte dem erfindungsgemäßen Schaum aus frischer Milch wie er im Anspruch 1 gekennzeichnet ist.

Es sei darauf hingewiesen, daß der Wasserwert $a_w$ (Aktivität an Wasser) mit der Haltbarkeit der Lebensmittel verknüpft ist, d. h. mit ihrer Resistenz gegen den Angriff von Mikroorganismen. $a_w$ wird durch das folgende Verhältnis angegeben: $N\,H_2O/(Nd + N\,H_2O)$, wobei Nd die Gesamtzahl der im Lebensmittel gelösten Mol (verschiedene vorliegende lösliche Substanzen) und $N\,H_2O$ die Zahl der Wassermol angibt. $A_w$ wird ebenfalls definiert durch das Verhältnis $P_1H_2O/PH_2O$, worin der Zähler den Wasserdampfdruck in dem Lebensmittel und der Nenner den Dampfdruck des reinen Wassers bei der betrachteten Temperatur angibt.

Als süßendes und schützendes Adjuvans (B) können Mono- und Polysaccharide verwendet werden wie Glukose, Galactose, Fructose, Saccharose, Maltose, Lactose sowie die Oligosaccharide, die bei der Spaltung der Polysaccharide entstehen und andere Kohlenhydrate (Amidon, Cellulose, Dextrine, Maltodextrine usw.). Solche Kohlenhydrate können in Form ihrer natürlichen Extrakte wie z. B. Maissirup, Glukose-Sirup, Melasse, Honig usw. eingesetzt werden. Als Polyalkohole können die hydrierten Zucker wie Sorbit, Maltitol, Xylit und andere sowie die Polyalkohole Glycerin, Propylenglykol und andere ähnliche Verbindungen, die in Lebensmitteln verwendbar sind, eingesetzt werden. Im übrigen kann der erfindungsgemäße Schaum noch Mineralsalze enthalten, wie Sorbate, Citrate, Tartrate, Glukonate, Lactate, Acetate und andere Salze von Natrium und Kalium.

0 246 197

Die Proportion der verwendbaren süßenden Adjuvanzien im erfindungsgemäßen Produkt muß ausreichen, um seine Erhaltung zu sichern, d. h. um dazu beizutragen (gleichzeitig mit den anderen Ingredienzien), eine Wasseraktivität, die 0,80 nicht übersteigt und vorzugsweise unter diesem Wert liegt, zu liefern. Die Menge dieser Adjuvanzien muß gleichfalls an ihre spezielle süßende Kraft angepaßt werden, damit das Lebensmit tel einen angenehm süßen Geschmack hat. Demnach lassen sich die Konzentration dieser Zusätze in Abhängigkeit von ihrer süßenden Kraft, ihrem Molekulargewicht und in Abhängigkeit vom Geschmack, den mit dem bestimmten Lebensmittel verleihen möchte, variieren. Im allgemeinen liegt der Zuckergehalt des vorliegenden Nahrungsmittels vorzugsweise zwischen 50 und 75 %, aber diese Grenzen können gewissen speziellen Fällen überschritten werden.

Die Menge an Mineralsalzen variiert - wenn sie verwendet werden - zwischen 0,1 und 2 Gew.-%.

Das erfindungsgemäße Nahrungsmittel enthält als Ingrediens (C) einen oder mehrere polymere gelierende Stabilisatoren, die das Auftreten der Synerese, d. h. die Abtrennung eines Teils des Wassers von der Masse im Verlauf der Lagerung, verhindern können. Solche Polymere sind z. B. Gelatine, Carrageenate, Alginate, Agar, Pectin, Dextran, Xanthan sowie andere gelierende und viskosierende Gummi-Arten. Vorzugsweise setzt man 0,2 bis 3 Gew.-% an derartigen Polymeren oder Polymerengemischen zu. In gewissen speziellen Fällen können diese Grenzen über- oder unterschritten werden.

Das erfindungsgemäße Nahrungsmittel enthält außerdem ein quellendes (schäumendes) Agens, das, wenn es in Gegenwart von Luft (oder einem anderen Gas) geschlagen wird, einen Schaum bildet. Dieser Schaum - vermischt mit den übrigen Ingredienzien - gibt dem Nahrungsmittel seine endgültige luftdurchsetzte Struktur. Als quellendes Mittel wird Albumin in wäßriger Lösung bevorzugt. Andere quellende Agenzien wie gewisse pflanzliche Proteine, die bekanntermaßen schäumend wirken (Soja-Proteine, HYFOAMA usw.), können in bestimmten Fällen geeignet sein. Der Vorteil von Eier-Albumin liegt darin, daß es dem erfindungsgemäßen Schaum-Nahrungsmittel eine ausgezeichnete Stabilität verleiht; diese Stabilität entsteht durch eine Koagulation des geschlagenen Albumins im Verlaufe der Herstellung des Schaums - wie nachfolgend dargelegt ist.

Im allgemeinen ist es vorteilhaft, 0,5 bis 5 Gew.-% Albumin zu verwenden.

Das vorliegende leichte Nahrungsmittel enthält noch ein oder mehrere aromatisierende Ingredienzien, die dazu bestimmt sind, ihm den geschmacklichen Charakter zu geben, der "Schaum aus frischer Milch" eigen ist. Als solche Aromastoffe oder aromatisierende Zusammensetzungen kommen beispielsweise in Frage: Kakao, Schokolade, Kaffee, Toffee, verschiedene Früchte (in Form von Extrakten, Marmeladen, wiederaufbereiteten oder frischen Früchten usw.), verschiedene alkoholische Getränke wie Rum, Kirsch, Whisky, Cognac, Wacholder etc., geschälte und zerkleinerte Mandeln oder Nüsse, Gewürze und andere. Die Menge dieser aromatisierenden Zusammensetzungen ist äußerst variabel und hängt von der Verwendung des Schaumes besonders in der Schokoladenherstellung (zum Füllen von Fondants) in der Süßwarenherstellung oder in der Biskuiterie zur Herstellung von Biskuits, Torten und Kuchen usw. ab. Im allgemeinen verwendet man 0,5 bis 10 Gew.-% an solchen aromatisierenden Zusammensetzungen - je nach ihrer Natur und ihrer Konzentration. Diese Grenzen sind keineswegs kritisch und können nach Bedarf überschritten werden.

Die Milch im vorliegenden Nahrungsmittel kann teilweise oder vollständig entrahmte Vollmilch sein. Wenn man entrahmte Milch verwendet, kann man hinterher (d. h. nach seinem Quellen) dem Nahrungsmittel zusätzlich Fettsubstanzen beigeben, insbesondere Rahm, Milchfett, Kakaobutter und andere.

Zur Herstellung des erfindungsgemäßen Nahrungsmittels bedient man sich des in Anspruch 9 definierten Verfahrens. Es ist von Bedeutung, anzumerken, daß die Stufe, in der das Schlagen des schäumenden Agens (E) erfolgt, in gewisserweise von der Zusammensetzung der Ausgangsmilch abhängt, d. h. davon, ob die Milch den ursprünglichen Fettgehalt hat oder ob das Fett durch Entrahmen abgetrennt wurde. Tatsächlich verhindert das Vorhandensein von Fettsubstanzen in der intermediären Zusammensetzung der Ingredienzien (A), (B), (C) und (E) deren Umwandlung in Schaum durch Schlagen. Es ist in diesem Fall notwendig, die bereits geschlagene Lösung des quellenden Agens (E) der Mischung der anderen Bestandteile beizumengen. Anderenfalls ist ein solches getrenntes Schlagen nicht notwendig, und das Verfahren kann dann darauf beruhen, das Gemisch der Ingredienzien (A), (B), (C) und (E) direkt zu schlagen; das aromatisierende Ingrediens (D) wird entweder vor dem Schlagen zugefügt - wenn es keinen Fettbestandteil enthält - oder im anderen Fall nach dem Schlagen. Diese verschiedenen Varianten sind in den Ansprüchen 12 bis 14 angegeben. Es ist ganz offensichtlich, daß, wenn man das direkte Schlagen des Gemisches der Komponenten (Fall, in dem dieses Gemisch keinen Fettbestandteil enthält) vornimmt, hinterher die Fettsubstanzen wie z. B. Butter, Rahm, Kakaobutter und andere dem Schaum beigemengt werden können.

Bezüglich der verschiedenen Handhabungen, aus deren Gesamtheit sich das Verfahren der Herstellung des erfindungsgemäßen Nahrungsmittels zusammensetzt, seien die folgenden Punkte hervorgehoben:

Die möglichen Arbeitsgänge der Entrahmung und der Pasteurisierung der Milch sind herkömmlicher Art und nicht Teil dieser Erfindung, die übrigen Arbeitsvorgänge müssen mit Sorgfalt durchgeführt werden und unter gut kontrollierten Bedingungen, um Überhitzungen der Ingredienzien und besonders das Auftreten unerwünschter Geschmacksrichtungen (Geschmack konzentrierter Milch), die den Erfolg der Präparation schaden würden, zu vermeiden. Im besonderen muß die vorangehende Evaporation (I) unter möglichst niedrigem Druck durchgeführt werden (jedoch vereinbar mit den Erfordernissen eines industriellen Verfahrens), d. h. vorzugsweise zwischen 1 und 10 Torr. Unter solchen reduzierten Drucken übersteigt die Evaporationstemperatur 50°C nicht, und man hält sie bevorzugt darunter, z. B. zwischen 30 und 40°C. Die Wassermenge, die bei diesem Arbeitsvorgang eliminiert wird, ist variabel und hängt von den Eigenschaften

3

und der Konsistenz ab, die man dem bestimmten Nahrungsmittel verleihen möchte. Im allgemeinen entfernt man eine Wassermenge, die etwa 70 bis 90 % des in der Ausgangslösung von Milch und Zucker vorliegenden Wassers entspricht.

Die Zugabe des Polymeren (C) erfolgt bei einer Temperatur, die ausreicht, um seine schnelle und homogene Lösung zu sichern, aber dennoch aus den oben erklärten Gründen nicht zu hoch liegt. Im allgemeinen sind Temperaturen in der Größenordnung von 50 bis 80°C angemessen, vorzugsweise um 70°C.

Die Temperatur, bei der man das aromatisierende Agens (D) zufügt, hängt von der Natur desselben ab. Wenn es sich um ein empfindliches Produkt handelt (alkoholische Getränke, Kaffee usw.), darf nicht zu sehr erhitzt werden (oder genauer: längeres Erhitzen ist zu vermeiden). Wenn es möglich ist, den Schaum durch direktes Schlagen (was - wie bereits beschrieben - bei einer Temperatur erfolgt, die zur Koagulation des ALbumins ausreicht, d. h. etwa bei 50 bis 80°C) zu bilden, führt man dieses Schlagen möglichst schnell durch. Im allgemeinen wird das Schlagen in einer herkömmlichen Vorrichtung (ein Batteur von HOBART z. B.) durchgeführt, und sobald diese in Gang gesetzt ist, entfernt man die Heizquelle. Von da an bewirkt die starke Bewegung, die vom Schlagen herrührt (welche etwa 2 bis 10 min andauert) eine schnelle Abkühlung der Masse, die am Ende des Schlagens, die Umgebungstemperatur, d. h. eine Temperatur zwischen 20 und 30°C, erreicht.

Wenn der Aromastoff zu fett ist, um vor dem Schlagen beigemengt zu werden oder auch, wenn die Milch Fettsubstanzen enthält (Vollmilch) ist es erfahrungsgemäß notwendig, das schäumende Agens zuerst zu schlagen und den erhaltenen Schaum dem Rest der Ingredienzien beizumengen, wobei dieser Arbeitsvorgang mit Vorsicht durchgeführt werden muß, um den Schaum nicht zu zerstören. In diesem Fall kann man dem so aufgelockerten Nahrungsmittel die fehlenden Ingredienzien, insbesondere den Aromastoff und gegebenenfalls zusätzliche Fettsubstanzen, beimengen.

Um das zu Schaum geschlagene Albumin dem Rest des Nahrungsmittels beizumengen, geht man sorgfältig vor; vorzugsweise rührt man langsam mit einem breiten Spatel; es wird vorzugsweise bei Umgebungstemperatur gearbeitet und anschließend zur Koagulation des Albumins erhitzt.

Zur Beimengung des zu Schaum geschlagenen Albumins zum Rest der Ingredienzen kann gleichfalls ein "statischer" Mischer verwendet werden, der aus einem Rohr mit Hindernissen besteht. In dieses Rohr läßt man Seite an Seite bei geeigneter Temperatur auf der einen Seite den Albumin-Schaum (m) und auf der anderen Seite die Lösung des Restes der Ingredentien (s) gelangen. Durch die Hindernisse werden die Ströme m und s wiederholt vereinigt und wieder abgeschnitten, so daß am Ausgang des statischen Mischers eine homogene Masse vorliegt. Diese Technik ist in Anspruch 15 zusammengefaßt.

Die folgenden Beispiele erläutern die Erfindung im einzelnen:

Beispiel 1:

Es wurden 1,125 l (1,151 kg) frische entrahmte Milch mit einem Gehalt von 56,25 g Lactose, 37,12 g Proteinen und 1012,5 g Wasser verwendet. Zu dieser Milch hat man einen Glucose-Sirup (ISOSWEET AMYLUM N.V., Holland), der 566,7 g Festsubstanz und 242,9 g Wasser enthielt, gegeben. Diese Lösung wurde unter vermindertem Druck (40°C/10 Torr) evapo riert und so 1050 g Wasser entfernt (Rest 890 g), die derart konzentrierte Lösung enthält dann (in Gewichtsprozenten): 69,99 % Zucker, 4,17 % Proteine und 23,7 % Wasser.

Man verwendete 86,8 g dieser Lösung, in die man bei 70 bis 80°C 1 g Gelatine und 0,2 g träges Pektin (Herkunft: GEWO) mengte.

Nach der Lösung der polymeren Geliermittel hat man die Temperatur auf 80°C gebracht, eine Lösung von 1 g Eieralbumin in 4 ml Wasser zugegeben und das Ganze 5 min mit Luft in einem Batteur von HOBART (nicht geheizt) geschlagen. Man erhielt so nach Abkühlen auf etwa 30°C einen homogenen Schaum der Dichte 0,7. Dann wurde bei 30°C eine Mischung zugefügt, was zu einem beständigen und homogenen mit Kakao aromatisierten Schaum der Dichte 0,75 führte.

Dieses Produkt wurde von professionellen Kostern ausgezeichnet beurteilt und weist eine vollkommene Lagerstabilität auf; es ist von fester Konsistenz und wurde zur Füllung von Schokoladen-Zuckerwaren verwendet.

Es sei darauf hingewiesen, daß dieses Produkt durch Zusatz eines alkoholischen Getränkes z. B. Cognac oder Whisky, in Lösung mit der Butter und dem Kakao, verfeinert werden kann.

Beispiel 2:

Eine Lösung von Glukosesirup in Vollmilch wurde der Evaporation unterworfen, die eingesetzten Konzentrationen waren die gleichen wie in Beispiel 1. Man erhielt so eine gezuckerte und evaporierte Frischmilch mit folgender Zusammensetzung: 23,6 Gew.-% Wasser, 68 Gew.-% Kohlenhydrate, 4 Gew.-% Eiweiß und 4,5 Gew.-% Fett.

Zu 91,65 g dieser konzentrierten Milch hat man sukzessive bei 70°C 0,4 g Gelatine, 0,3 g SATIAGUM (gomme alimentaire, geliefert durch CECA) und 0,15 g Natrium-citrat gegeben. Man hat auf 50°C abgekühlt und noch 2,5 g löslichen Kaffee (Marke: MAXWELL HOUSE) beigemengt.

Außerdem wurde eine wäßrige Lösung von 20 Gew.-% pulverförmigem Eiweiß mit den üblichen Mitteln zu Schnee geschlagen.

5 g dieses Eiweißschaums hat man dann vorsichtig mit der vorhergehenden, auf 50°C erhitzten Lösung gemischt. Dieses Gemisch wurde in etwa 1 min hergestellt, in dieser Zeit kühlte die Masse auf 30°C ab. Auf diese Weise hat man einen mit Kaffee aromatisierten Schaum von frischer Milch erhalten, der eine Dichte von 0,75 sowie folgende Zusammensetzung in Gew.-% aufwies: 62,27 % Kohlenhydrate, 25,62 % Wasser, 4,7 % Eiweiß und 4,59 % Fett.

Dieser Schaum, der vollkommen lagerstabil ist und einen ausgezeichneten Geschmack aufweist, wurde zur Füllung von Schokoladen-Fondants verwendet.

Beispiel 3:

Man ist verfahren wie im Beispiel 1 beschrieben, ausgehend von entrahmter, gezuckerter und evaporierter Milch (die Konzentrationen sind der folgenden Tabelle I zu entnehmen). In jedem Versuch wurden für 100 g Gemisch 1,4 g Gelatine, 0,2 g träges Pektin und als schäumendes Agens 5 g einer 20 %igen wäßrigen Lösung von Eieralbumin verwendet.

Die nachfolgende Tabelle I faßt die verschiedenen Parameter zusammen, wie z. B. Gehalt der evaporierten Milch an Zucker, Wasser und Eiweiß, Natur und Menge des aromatisierenden Agenses sowie Dichte des Schaums in kg/l.

### Tabelle I

| Ver-such Nr. | evaporierte Milch | | | | Aromastoff (g) | Schaum | | | |
| | (g) | Gehalt an (g) | | | | d. | Gehalt an % | | |
| | | Zucker | Wasser | Ei-weiß | | | Zucker | Wasser | Ei-weiß |
| 1 | 90,4 | 61,9 | 21,4 | 3,7 | Schwarze Schokolade (3) | 0,64 | 63,4 | 25,4 | 5,7 |
| 2 | 88,4 | 60,5 | 20,9 | 3,6 | Aprikosen-Konfitüre (5) | 0,6 | 63,8 | 26,5 | 5,7 |
| 3 | 90,4 | 61,9 | 21,4 | 3,7 | Nuß-Masse (3) | 0,6 | 62 | 25,4 | 5,8 |
| 4 | 83,4 | 57,1 | 19,8 | 3,4 | Orangen-Marmelade (10) | 0,6 | 64 | 26,5 | 5,5 |
| 5 | 91,4 | 62,6 | 21,6 | 3,8 | entölter Kakao (2) | 0,55 | 63,8 | 25,6 | 5,8 |

Beispiel 4:

Man ist vorgegangen wie in Beispiel 3, jedoch mit folgendem Unterschied: das aromatisierende Agens wurde nach dem Schlagen zugegeben, in dem Moment, wo der Schaum seine endgültige Konsistenz bei 30° C im Batteur erreicht hatte, allerdings unter Verlangsamung der Bewegung des Batteurs, um den Schaum nicht zu zerstören.

Die Parameter sowie die Ergebnisse sind in der folgenden Tabelle II aufgeführt.

Tabelle II

| Versuch Nr. | evaporierte Milch | | | | Aromastoff (g) | Schaum | | | | |
|---|---|---|---|---|---|---|---|---|---|---|
| | (g) | Gehalt an (g) | | | | d | Gehalt an % | | | |
| | | Zucker | Wasser | Eiweiß | | | Zucker | Wasser | Eiweiß | Fett-Substanzen |
| 1 | 90,75 | 62,13 | 21,5 | 3,7 | löslicher Kaffee NESCAFE (2,5) | 0,60 | 63,4 | 25,5 | 5 | |
| 2 | 90,4 | 61,9 | 21,4 | 3,7 | Kakao POULAIN (3) | 0,60 | 62,4 | 25,4 | 5,8 | |
| 3 | 85,8 | 60 | 20,3 | 3,6 | Whisky (4) | | | | | |
| | | | | | wasserfreie Butter (4) | 0,71 | 60 | 24,3 | 5,2 | 4 |
| 4 | 86,8 | 60,75 | 20,6 | 3,6 | Kakao POULAIN (3) | | | | | |
| | | | | | Kakaobutter (4) | 0,75 | 61 | 24,6 | 5,2 | 4 |
| 5 | 86,8 | – | – | – | Whisky BALLANTINE (3) | | | | | |
| | | | | | wasserfreie Butter (4) | 0,70 | 60 | 2,5 | 4 | 4,5 |

Beispiel 5:

Zu 1,125 l Vollmilch (1156 g) wurden 803,6 g 70 %iger Glukose-Sirup (ISOSWEET) gegeben. Diese Lösung wurde bei 40°C unter 5 bis 10 Torr einer Evaporation unterworfen. Man hat eine Menge von etwa 1100 g Wasser entfernt, wobei etwa 900 g einer gezuckerten evaporierten Milch verblieben, die folgende Zusammensetzung aufwies: 23,57 % Wasser; 67,87 % Kohlenhydrate; 3,96 % Proteine; 4,55 % Fett (Gew.-%).

Von dieser evaporierten Milch wurden Portionen entnommen und bei 70°C polymere Geliermittel in den in Tabelle III angegebenen Mengen darin gelöst; nach dem Abkühlen auf 50°C wurden dann aromatisierende Agenzien beigemischt (s. Tabelle III).

Dann hat man den eben genannten Bestandteilen vorsichtig bei 50°C nach der gleichen Technik wie sie in dem Beispiel 2 beschrieben worden war, 5 g eines Schaumes, der durch vorheriges Schlagen einer 20 %igen wäßrigen Lösung von Albumin hergestellt worden war, beigemischt. Die Arbeits-Parameter sowie die Dichte des so erhaltenen Schaumes sind in Tabelle III aufgeführt.

## Tabelle III

| Ver- such Nr. | evaporierte Milch (g) | polymeres Geliermit- tel (g) | Na-Citrat (g) | aromatisie- rendes Agens (g) | Schaum (d) |
|---|---|---|---|---|---|
| 1 | 88,4 | Gelatine (0,3) Pektin (0,3) SATIAGUM 118/S | – | Nußcreme (5) | 0,70 |
| 2 | 89,6 | Gelatine (0,3) SATIAGUM (0,3) | – | Orange (5) | 0,74 |
| 3 | 90,75 | Gelatine (1,4) SATIAGUM (0,2) | 0,15 | löslicher Kaffee MAXWELL HOUSE (2,5) | 0,70 |
| 4 | 91,65 | Gelatine (0,4) SATIAGUM (0,3) | 0,15 | Kaffee (2,5) | 0,80 |
| 5 | 90,91 | Gelatine (0,3) SATIAGUM (0,3) | – | Kakao (3) | 0,70 |

Der Schaum von frischer Milch, der wie oben beschrieben aromatisiert war, wurde zur Herstellung von Zuckerwaren mit einer Schokoladenumhüllung (Gemisch schwarze Schokolade/Milchschokolade 50/50) verwendet. Diese Zuckerwaren wurden von Spezialisten der Schokoladenherstellung als ausgezeichnet beurteilt.

Beispiel 6:

Man hat, wie in den vorhergehenden Beispielen, eine evaporierte Vollmilch hergestellt, indem man ein Gemisch von 1152 g Milch, 404 g 70 %igem Glukosesirup (ISOSWEET) und 404 g 67 %igem wäßrigen Sorbit bei einem Druck von etwa 5 bis 10 Torr in einem rotierenden auf etwa 40°C geheizten Evaporateur der Evaporation unterwarf. Man erhielt so eine Milch (927g) der folgenden Zusammensetzung (Gew.-%: 65,65 % Kohlenhydrate; 25,61 % Wasser; 3,88 % Eiweiß; 4,49 % Fett.

Es wurde ein mit Haselnuß aromatisierter Schaum von frischer Milch aus 88,41 g evaporierter Milch, 0,3 g Gelatine, 0,3 g Pektin (SATIAGUM 118/S), 5 g Haselnußcreme und 5 g 20 %iger Albumin-Lösung, geschlagen, hergestellt. Dabei wurde vorgegangen wie im Beispiel 5 beschrieben. Der so erhaltene Schaum hatte eine Dichte von 0,74 kg/l und wies folgende Zusammensetzung auf: 59,54 % Zucker; 27,63 % Wasser; 4,56 % Eiweiß und 5,57 % Fett.

Man stellte einen Schaum auf die gleich Art her wie oben beschrieben wurde, ausgehend von: 89,61 g evaporierter Milch; 0,3 g Gelatine 260; 0,3 g SATIAGUM 118/S; 5 g Aprikosenkonfitüre; 5 g geschlagenes 20 %iges wäßriges Albumin. Der erhaltene Schaum wies einen exzellenten Geschmack auf und hatte eine Dichte von 0,72 sowie folgende Zusammensetzung: 62,08 % Zucker; 28,54 % Wasser; 4,43 % Eiweiß und 4,02 % Fett.

Beispiel 7:

Man verwendete 1155 g Vollmilch, der man 754 g eines handelsüblichen Glukose-Fructose (50/50)-Sirups mit 566 g Festsubstanzen (347 g 81,5 %ige Glukose und 407,2 g 69,5 %ige Fructose) einmengte und die man unter Vakuum bis zu 928 g evaporierte. Diese evaporierte Milch enthielt (in Gew.-%): 66,93 % Kohlenhydrate; 24,74 % Wasser; 3,88 % Eiweiß; 4,48 % Fett.

Ausgehend von dieser evaporierten Milch hat man zwei Schäume von frischer Milch hergestellt, die mit Schokolade bzw. mit Kaffee aromatisiert waren. Das Verfahren ist genau das gleiche wie im vorangehenden Beispiel, die Zugabe der 5 g Eiweißschaum erfolgt am Ende.

Zusammensetzung (1):

91,41 g evaporierte Milch; 0,3 g Gelatine 260; 0,3 g SATIAGUM 118/S; 2 g Schokolade. Die endgültige Dichte beträgt 0,75.

Zusammensetzung (2):

91,21 g evaporierte Milch; 0,3 g Gelatine; 0,3 g SATIAGUM; 0,2 g Natrium-citrat, 2 g löslicher Kaffee. Die endgültige Dichte beträgt 0,7.

Es sei darauf hingewiesen, daß sehr günstige Ergebnisse erzielt wurden, wenn der Milch vor dem Evaporieren ca. 0,03 % Agar zugesetzt wurden.

**Patentansprüche**

1. Leichtes Nahrungsmittel in Form von Schaum auf der Basis von frischer Milch,
**dadurch gekennzeichnet,** daß es als homogenes Gemisch
A) frische unter vermindertem Druck evaporierte Milch;
B) mindestens ein süßendes Adjuvans und/oder Schutzmittel, ausgewählt aus den Kohlenhydraten und den Polyalkoholen;
C) mindestens ein hydrophiles antisyneretisches polymeres Geliermittel;
D) mindestens ein aromatisierendes Ingrediens oder eine aromatisierende Zusammensetzung;
E) ein quellendes zu Schaum geschlagenes Agens enthält;
das Ganze stellt sich in Form einer festen, nichtviskosen Masse dar, die Mikroblasen aus Luft oder einem inerten Gas dispergiert enthält, und deren Dichte, Wasserwert $a_w$ und Wassergehalt 0,75, 0,80 und 30 Gew.-% jeweils nicht übersteigen.

2. Nahrungsmittel gemäß Anspruch 1,
**dadurch gekennzeichnet,** daß die Kohlenhydrate (B) aus den Mono-, Poly- und Oligosacchariden wie Glukose, Fructose, Galactose, Mannose, Lactose, Saccharose, Maltose ausgewählt sind; die Polyalkohole sind aus der Gruppe Sorbit, Mannit, Propylenglykol und Glycerin ausgewählt.

3. Nahrungsmittel gemäß Anspruch 1,
**dadurch gekennzeichnet,** daß die Polymere aus der Gruppe Gelatine, Agar, Dextran, Xanthan, Carrageenate, Alginaten, Gummiguar, Gummi arabicum und Agar ausgewählt sind.

4. Nahrungsmittel gemäß Anspruch 1,
**dadurch gekennzeichnet,** daß die aromatisierenden Ingredenzien (D) aus folgenden ausgewählt sind: Früchte, gemahlene Körner, Schokolade, Kaffee, Karamel, Destillate von Früchten, Marmeladen, alkoholische Getränke wie Branntwein, Cognac, Whisky, Rum und andere.

5. Nahrungsmittel gemäß Anspruch 1,
**dadurch gekennzeichnet,** daß das quellende Agens (E) eine wäßrige Lösung von Albumin ist.

6. Nahrungsmittel gemäß Anspruch 1,
**dadurch gekennzeichnet,** daß es zusätzlich ein oder mehrere Mineralsalze aus der Gruppe der Alkaliphosphate, -citrate, -sorbate, -tatrate, -malate und -lactate enthält.

7. Nahrungsmittel gemäß Anspruch 1,
**dadurch gekennzeichnet,** daß 50 bis 70 Gew.-% Kohlenhydrate (B); 0,5 bis 3 Gew.-% Polymer (C); 0,5 bis 5 Gew.-% quellendes Agens (E) und 0,5 bis 10 Gew.-% aromatisierendes Ingrediens (D) enthalten sind.

8. Nahrungsmittel gemäß Anspruch 1,
**dadurch gekennzeichnet,** daß es darüberhinaus 0,5 bis 5 % Fett enthält.

9. Verfahren zur Herstellung eines lockeren leichten Nahrungsmittels gemäß Anspruch 1, **gekennzeichnet durch** die Gesamtheit der folgenden Misch-Arbeitsgänge:
I) ein süßendes Adjuvans und Schutzmittel (B) wird in frischer Milch (A) gelöst und diese Lösung wird einer Evaporation unter vermindertem Druck bis zu einem Wassergehalt von 10 bis 30 Gew.-% unterworfen, wobei die Temperatur 60°C nicht übersteigt, anschließend wird zwischen 50° und 80°C ein polymeres Geliermittel (C) zu dieser so konzentrierten Lösung gegeben;

II) zwischen 70 und 80°C wird der erhaltenen Lösung ein schäumendes Agens (E) beigemengt, welches in Gegenwart von Luft oder einem inerten Gas geschlagen wurde, so daß die Lösung in einen Schaum übergeführt wird;

III) man fügt eine aromatisierende Komponente (D) zu; dieser Arbeitsgang wird vor oder nach dem Arbeitsgang (II) durchgeführt, (D) wird entweder zu dem Schaum, der beim Arbeitsgang (II) entsteht, oder zu dem Vorgemisch der Ingredenzien (A) bis (C), das aus dem Arbeitsgang (I) hervorgeht, gemischt.

10. Verfahren gemäß Anspruch 9, **dadurch gekennzeichnet,** daß Vollmilch verwendet wird und das quellende Agens (E) zu Schaum geschlagen ist, bevor es den anderen Bestandteilen in der Stufe (II) beigemengt wird.

11. Verfahren gemäß Anspruch 9, **dadurch gekennzeichnet,** daß entrahmte Milch verwendet wird und das quellende Agens (E) den anderen Bestandteilen nicht geschlagen in der Stufe (II) beigemengt wird und daß dann das Gemisch durch Schlagen in Schaum übergeführt wird.

12. Verfahren zur Herstellung eines leichten Nahrungsmittels gemäß Anspruch 1, **dadurch gekennzeichnet,** daß die folgenden Misch-Arbeitsgänge durchgeführt werden:

Ia) Es wird ein süßendes Adjuvans und Schutzmittel (B) in frischer entrahmter Milch (A1) gelöst und diese Lösung einer Evaporation unter reduziertem Druck - ohne 60°C zu überschreiten -bis zu einem Wassergehalt von 20 bis 30 Gew.-% unterworfen;

IIa) zwischen 50°C und 80°C wird ein polymeres Geliermittel (C) und eine aromatisierende Komponente (D) zugefügt;

IIIa) bei 80°C wird ein quellendes Agens (E) beigegeben und man führt ein starken Schlagen des Gemisches in Gegenwart von Luft oder einem inerten Gas durch; wenn die Heizquelle entfernt wird, führt dieser Arbeitsgang zu einer Umwandlung des Gemisches in einen beständigen Schaum, dessen Dichte 0,75 nicht übersteigt.

13. Verfahren zur Herstellung eines leichten Nahrungsmittels gemäß Anspruch 1, **dadurch gekennzeichnet,** daß die folgenden Misch-Arbeitsgänge durchgeführt werden:

Ib) man löst ein süßendes Adjuvans und Schutzmittel (B) in frischer entrahmter Milch (A1) und unterwirft diese Lösung einer Evaporation unter vermindertem Druck - ohne 60°C zu überschreiten - bis zu einem Wassergehalt von 20 bis 30 Gew.-%;

IIb) zwischen 50 und 80°C fügt man ein polymeres Geliermittel (C) zu;

IIIb) bei 80°C wird ein quellendes Agens (E) beigegeben und nach Entfernen der Heizquelle führt man ein kräftiges Schlagen des Gemisches in Gegenwart von Luft oder einem inerten Gas durch; dieser Arbeitsgang führt zum Abkühlen des Gemisches und seiner Umwandlung in einen beständigen Schaum mit einer Dichte unter 0,75;

IVb) zwischen 20 und 30°C wird eine aromatisierende Komponente (D) beigemengt.

14. Verfahren zur Herstellung eines leichten Nahrungsmittels gemäß Anspruch 1, **dadurch gekennzeichnet,** daß die folgenden Arbeitsgänge durchgeführt werden:

Ic) ein süßendes Adjuvans und Schutzmittel (B) wird in frischer Vollmilch (A) gelöst und diese Lösung einer Evaporation unter vermindertem Druck -ohne 60°C zu überschreiten - bis zu einem Wassergehalt von 20 bis 30 Gew.-% unterworfen;

IIc) zwischen 50°C und 70°C wird ein polymeres Geliermittel (C) und eine aromatisierende Komponente (D) zugegeben;

IIIc) bei 80°C wird als quellendes Agens Eieralbumin in wäßriger Lösung (E), das vorher in Gegenwart von Luft oder einem inerten Gas zu Schaum geschlagen wurde, zugefügt, wobei das Gemisch zustandekommt, indem die Komponenten miteinander in Kontakt gebracht werden und sie laminaren, nicht-turbulenten Bewegungen unterworfen werden derart, daß sie sich nach und nach zu einem homogenen luftdurchsetzten Gemisch vereinigen, dessen Struktur sich durch Koagulation des Albumins stabilisiert.

15. Verfahren gemäß Anspruch 9 oder 14, **dadurch gekennzeichnet,** daß das Beimengen des Schaums des quellenden Agens (M) zur Lösung oder Suspension (S) des Rests der Ingredenzien des Nahrungsmittels, oder umgekehrt, folgendermaßen ausgeführt wird:

- man bildet einen ersten Strom s der Lösung und einen zweiten Strom m des Schaumes;
- man läßt diese Ströme sich nebeneinander in der gleichen Richtung bewegen und sich laminar vereinigen, so daß ein einziger Strom ms mit zwei sich berührenden und nebeneinander liegenden Komponenten m und s gebildet wird;
- man teilt diesen Strom, annähernd quer zur Verbindungszone der beiden Komponenten, in zwei neue unabhängige Ströme $(ms)_1$ und $(ms)_2$, wobei jeder dieser Ströme eine Portion des Bestandteils m und eine Portion des Bestandteils s beinhaltet;
- dann ändert man durch die Schräge von in den Verlauf der Ströme zwischengestellte schraubenförmige Hindernisse die Form und die Richtung des einen in bezug auf den anderen Strom und - wie

9

zuvor - vereinigt man sie erneut zu einem einzigen Strom, wobei die durch die Hindernisse aufgezwungenen Änderungen im wesentlichen zum Inkontaktbringen der Komponente m und $(ms)_1$ mit der Komponente s und $(ms)_2$ und umgekehrt führen, so daß ein annähernd tetraphasiger Strom $msms = (ms)^2$ entsteht;

- die Arbeitsgänge des Abschneidens, der Wiederausrichtung und des Nebeneinanderreihens der Ströme werden wiederholt bis zur Erlangung eines makroskopisch homogen zusammengesetzten Stromes $msms ... ms = (ms)^n$, wobei n nicht unter 12 liegt.

16. Verfahren gemäß Anspruch 13,

**dadurch gekennzeichnet,** daß man beim Arbeitsgang IVb ebenfalls eine Fett-Substanz mit dem Schaum, der die anderen Komponenten enthält, vermischt.

Europäisches
Patentamt

**EUROPÄISCHER RECHERCHENBERICHT**

Nummer der Anmeldung

EP 87 81 0300

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 117 940 (G. BAUDACH) * Anspruch 1 * | 1-3 | A 23 C 9/154 A 23 P 1/16 |
| | --- | | |
| A | FR-A-2 118 757 (LENDERINK) * Anspruch 1; Beispiele 7,9; Seite 1, Zeilen 28-38 * | 1-5 | |
| | --- | | |
| A | US-A-4 282 262 (J. BLAKE) * Ansprüche 1,10; Beispiele I-III * | 1-3 | |
| | --- | | |
| A | US-A-3 674 507 (D. CARASSO) * Anspruch 1; Beispiele 1,2 * | 1-4 | |
| | --- | | |
| A | DE-A-2 811 356 (G. BAUDACH) * Ansprüche 1-5 * | 1-4,6 | RECHERCHIERTE SACHGEBIETE (Int. Cl.4) |
| | --- | | |
| A | DE-A-3 031 254 (G. BAUDACH) * Ansprüche 1-8 * | 1-4 | A 23 C A 23 P |
| | --- | | |
| D,A | GB-A-2 057 848 (P. FERRERO) * Beispiel 1 * & FR-A-2 473 269 | 1 | |
| | --- | | |
| A | US-A-2 987 400 (A. HUNTER) * Ansprüche 1-10; Spalte 2, Zeilen 32-40; Beispiel 6 * | 1-4,6 | |
| | ----- | | |

Der vorliegende Recherchenbericht wurde für alle Patentansprüche erstellt.

| Recherchenort DEN HAAG | Abschlußdatum der Recherche 24-08-1987 | Prüfer DESMEDT G.R.A. |
|---|---|---|